# FASCICULE DE BREVET EUROPEEN

(11) **EP 3 499 626 B1**
(45) Date de publication et mention de la délivrance du brevet: **19.04.2023**
(21) Numéro de dépôt: 18211858.8
(22) Date de dépôt: 12.12.2018
(51) Int. Cl.: H01M 8/2425, C25B 1/04, H01M 8/1231, C25B 15/08, C25B 9/00, H01M 8/12, C25B 9/23, C25B 9/73, C25B 9/77, H01M 8/124

(54) **SYSTEME REVERSIBLE DE STOCKAGE ET DESTOCKAGE D'ELECTRICITE COMPRENANT UN CONVERTISSEUR ELECTROCHIMIQUE (SOFC/SOEC) COUPLE A UN SYSTEME DE STOCKAGE/DESTOCKAGE D'AIR COMPRIME (CAES)**
REVERSIBLES SYSTEM ZUM SPEICHERN UND ENTSPEICHERN VON STROM, DAS EINEN ELEKTROCHEMISCHEN LEISTUNGSWANDLER (SOFC/SOEC) UMFASST, DER AN EIN DRUCKLUFTSPEICHER-/ENTSPEICHERSYSTEM (CAES) GEKOPPELT IST
REVERSIBLE SYSTEM FOR STORING AND EXTRACTING ELECTRICAL POWER COMPRISING AN ELECTROCHEMICAL CONVERTER (SOFC/SOEC) CONNECTED TO A SYSTEM FOR COMPRESSED AIR EXTRACTION/STORAGE (CAES)

(30) Priorité: 13.12.2017 FR 1762045
(43) Date de publication de la demande: 19.06.2019
(73) Titulaire: Commissariat à l'Energie Atomique et aux Energies Alternatives, 75015 Paris (FR)
(72) Inventeur: REYTIER, Magali, 38054 GRENOBLE CEDEX 09 (FR); ROUX, Guilhem, 30854 GRENOBLE CEDEX 09 (FR)
(74) Mandataire: Cabinet Nony

(56) Documents cités:
- WO-A1-2016/096752
- WO-A1-2016/156374
- WO-A2-02/059987
- WO-A2-2007/048997
- FR-A1- 3 014 117
- US-A1- 2016 377 342

## Description

### Domaine technique

La présente invention concerne le domaine du stockage/déstockage d'électricité.

Elle concerne en particulier les systèmes comprenant des convertisseurs électrochimiques réversibles fonctionnant en pile à combustible à oxydes solides (SOFC acronyme anglais pour « *Solid Oxide Fuel Cell* »), et en mode inverse, en électrolyseur EHT, (EHT, ou EVHT pour électrolyse de la vapeur d'eau à haute température, ou HTE acronyme anglais pour « *High Temperature Electrolysis* », ou encore HTSE acronyme anglais pour *« High Temperature Steam Electrolysis* ») également à oxydes solides (SOEC, acronyme anglais pour « *Solid Oxide Electrolysis Cell »).*

L'invention vise de manière générale à améliorer le rendement de ce type de systèmes réversibles.

Par « électrode H₂ », on entend ici et dans le cadre de l'invention, une électrode d'un convertisseur électrochimique réversible sur laquelle, en mode pile à combustible, de l'hydrogène est consommé en tant que combustible ayant été apporté par du gaz hydrogène ou par un autre gaz contenant de l'hydrogène ou le cas échéant, par un mélange de méthane et d'eau obtenu par méthanation, et à l'inverse de l'hydrogène est produit au sein de cette électrode en électrolyse à partir de vapeur d'eau.

Une électrode H₂ est donc une anode dans une pile à combustible SOFC ou une cathode dans un électrolyseur SOEC.

De même, par « électrode O₂ », on entend ici et dans le cadre de l'invention, une électrode d'un convertisseur électrochimique réversible sur laquelle de l'oxygène est consommé en tant que comburant en mode pile à combustible ayant été apporté par de l'air ou par un autre gaz contenant de l'oxygène et à l'inverse est produit en électrolyse.

Une électrode O₂ est donc une cathode dans une pile à combustible SOFC ou une anode dans un électrolyseur SOEC.

### Art antérieur

Pour le stockage massif d'énergie de forte puissance, typiquement supérieure à 100MW, il a déjà été envisagé le stockage par air comprimé (CAES acronyme anglais pour *« Compressed Air Energy Storage »).*

Selon cette technologie, il est prévu de stocker de l'air comprimé produit avec l'électricité dans des cavités sous-terraines. Ces cavités sont choisies compte-tenu des volumes de stockage requis. Elles exigent des caractéristiques géographiques spécifiques, comme les cavités salines.

En phase de déstockage, l'air comprimé dans ces cavités est utilisé dans des turbines à gaz couplées à des alternateurs.

Toutefois, le rendement de cette solution de stockage n'est pas satisfaisant.

Il existe ainsi des cycles combinés récupérant la chaleur de la combustion des turbines à gaz pour des turbines à vapeur.

De plus, il est connu, selon un fonctionnement adiabatique, de récupérer la chaleur de l'air comprimé, de la stocker et de produire de la vapeur au moment du déstockage pour alimenter une turbine.

Il est également connu, de réaliser une récupération en continu de la chaleur produite par la compression d'air, selon un fonctionnement isotherme. Cela permet d'offrir les meilleurs rendements, à condition de proposer une récupération en continu de cette chaleur au moment où elle est produite par la compression.

Par ailleurs, il est connu qu'une pile à combustible SOFC peut fonctionner de manière réversible en tant qu'électrolyseur EHT, ce qui permet de stocker et de déstocker de l'électricité via le vecteur hydrogène. Un tel système de stockage/déstockage est envisagé pour favoriser la pénétration des énergies intermittentes.

On rappelle ici qu'une pile à combustible SOFC ou un électrolyseur EHT est un réacteur ou convertisseur électrochimique généralement constitué d'un empilement de motifs élémentaires (aussi appelés SRU pour « *Single Repeat Unit»)* comportant chacun une cellule électrochimique à oxydes solides, constituée de trois couches superposées l'une sur l'autre anode/électrolyte/cathode, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule et de séparer les compartiments anodiques et cathodiques qui sont les compartiments de circulation des gaz du côté respectivement des anodes et des cathodes des cellules.

Une pile SOFC fonctionne à des hautes températures, typiquement entre 700°C et 900°C.

En mode pile, le convertisseur doit être alimenté en hydrogène (ou en gaz naturel) et en oxygène (ou en en air) pour produire de l'électricité avec un rendement fortement dépendant de la stratégie d'alimentation en air de la pile.

En mode inverse, i.e. d'électrolyseur EHT, le convertisseur doit être alimenté, par de la vapeur d'eau pour produire de l'hydrogène et de l'oxygène avec un rendement électrique plus élevé que celui des technologies PEMFC ou alcaline.

Il est admis que plusieurs perfectionnements de ce fonctionnement réversible doivent être mis en oeuvre pour améliorer la chaîne complète de stockage-déstockage de l'électricité.

Le premier perfectionnement consiste à ne pas produire la vapeur d'eau à partir d'énergie électrique, afin de garantir un rendement élevé. Pour ce faire, des couplages à diverses sources de chaleur ont déjà été envisagés: couplage de l'électrolyseur à un réacteur nucléaire, à un incinérateur, à un réacteur catalytique ou chimique utilisant l'hydrogène produit en dégageant de la chaleur, tel qu'un réacteur de méthanation ou de traitement de biomasse. Mais, par définition, cela nécessite d'utiliser une source de chaleur existante ou présente au sein du système en transformant l'hydrogène produit.

Le deuxième perfectionnement consiste à mettre en oeuvre un fonctionnement du convertisseur électrochimique SOEC/SOFC, qui soit sous pression, typiquement de l'ordre de 30 bars. En effet, le fonctionnement est alors amélioré et certaines étapes de compression coûteuse de l'hydrogène produit peuvent être évitées. En revanche, si l'énergie requise pour la compression de l'eau liquide est négligeable, ce fonctionnement sous pression nécessite d'une part en mode électrolyseur de pouvoir vaporiser la quantité d'eau suffisante non plus à 100°C mais au-dessus de la température de saturation, notamment égale à 230°C à 30 bars, et d'autre part, en mode pile à combustible de comprimer suffisamment d'air à cette même pression pour alimenter en comburant la pile et pour la refroidir.

Le troisième perfectionnement est d'optimiser le pilotage du convertisseur électrochimique réversible. Les points de fonctionnement cible qui ont été envisagés pour permettre de garantir la durée de vie du convertisseur sont à une température de 700°C avec un taux d'utilisation de la vapeur de 80% en électrolyse et un taux d'utilisation de l'hydrogène de 80% en mode pile à combustible. De plus, l'air ne contenant qu'une proportion de 20% d'oxygène, le débit d'air minimum à introduire dans la pile à combustible pour garantir suffisamment de comburant doit être égal à au moins 3 fois le débit volumique d'hydrogène introduit.

Avant tout lié à des difficultés de gestion thermique à fort courant en mode pile à combustible et à des niveaux de tension différents (tension croissante supérieure à 0.8 V en électrolyse alors que tension décroissante en mode pile inférieure à 1 V), l'inversion du mode stockage au mode déstockage du même convertisseur électrochimique conduit à des puissances électriques différentes dans les conditions précitées, puisque la consommation électrique en électrolyse étant 3 à 5 fois supérieure à la production électrique en mode pile à combustible. Typiquement, la puissance est de l'ordre de 1,7 W/cm² en électrolyse et de 0,4 W/cm² en mode pile à combustible. En d'autres termes, le débit d'hydrogène stocké est 2 à 3 fois celui qui est utilisé en mode pile à combustible, sur la même durée. Enfin, le débit d'air requis en mode pile à combustible est d'au moins trois fois le débit d'hydrogène déstocké au sein de cette même pile pour garantir l'apport en comburant suffisant alors qu'il n'y a 20% d'oxygène dans l'air.

Ainsi, il convient de proposer un cycle complet de stockage-déstockage de l'électricité permettant aussi de produire et de consommer ou de valoriser les différents gaz (hydrogène, air, oxygène) de manière équilibrée.

Le quatrième perfectionnement consiste à pouvoir disposer de suffisamment d'air pour un fonctionnement en mode pile à combustible.

En plus de ces perfectionnements, il est connu de placer une turbine en aval d'une pile à combustible SOFC fonctionnant sous pression. Cela permet de récupérer l'énergie de détente des gaz de sortie et donc d'augmenter le rendement du système intégrant la pile.

Il est également connu d'avoir une pile à combustible SOFC alimentée en gaz naturel qui fonctionne avec un système de stockage par air comprimé CAES, en aval de cette pile : voir publications [1] à [3].

Il existe donc un besoin pour améliorer les systèmes réversibles de stockage et déstockage d'électricité, et notamment afin de pallier les inconvénients précités, à partir de convertisseurs électrochimiques réversibles fonctionnant à haute température, typiquement entre 600°C et 1000°C, en tant que pile à combustible à oxyde solides (SOFC), et de manière réversible en tant qu'électrolyseur EHT.

Le but de l'invention est de répondre au moins en partie à ce besoin. WO2007048997 divulgue un électrolyseur modifiable pour être utilisé en mode de déstockage d'électricité.

### Exposé de l'invention

Pour ce faire, l'invention concerne, sous l'un de ses aspects, un système réversible de stockage et déstockage d'électricité, comprenant :
- un convertisseur électrochimique comprenant au moins une cellule électrochimique à oxydes solides formée chacune d'une électrode H₂, d'une électrode O₂ et d'un électrolyte intercalé entre ces deux électrodes, le convertisseur étant adapté pour fonctionner en réacteur d'électrolyse de vapeur d'eau à haute température (SOEC) et de manière réversible en pile à combustible (SOFC) et vice-et-versa ;
- un réservoir de stockage et de déstockage d'hydrogène, adapté pour stocker de l'hydrogène ou, de manière réversible, pour fournir de l'hydrogène au convertisseur ou le cas échéant à un réacteur de méthanation en amont du convertisseur ;
- un compresseur d'air;
- un réservoir de stockage d'air, adapté pour stocker de l'air issu du compresseur en mode stockage de l'électricité et pour fournir de l'air au convertisseur en mode déstockage de l'électricité ;
- une ligne d'alimentation du convertisseur en eau liquide,
- un échangeur de chaleur, adapté pour échanger de la chaleur entre la ligne d'alimentation et le compresseur d'air,
le système étant configuré pour que :
- lorsque le système fonctionne en mode stockage de l'électricité et que le convertisseur fonctionne en électrolyse, le compresseur apporte à l'eau liquide, par le biais de l'échangeur, la chaleur produite lors de la compression d'air, afin de vaporiser l'eau avant son entrée dans l'électrode H₂ du convertisseur, tandis que l'air comprimé par le compresseur est stocké dans le réservoir d'air et l'hydrogène produit est stocké dans le réservoir d'hydrogène ;
- lorsque le système fonctionne en mode déstockage de l'électricité et que le convertisseur fonctionne de manière réversible en tant que pile à combustible, le réservoir d'hydrogène alimente en hydrogène l'électrode H2 du convertisseur, ou le cas échéant le réacteur de méthanation qui lui-même alimente en mélange de méthane et d'eau l'électrode H₂ du convertisseur, tandis que le réservoir d'air alimente en air l'électrode O₂ du convertisseur.

Autrement dit, l'invention consiste essentiellement à coupler un système de stockage d'air comprimé à un convertisseur électrochimique SOEC/SOFC fonctionnant en réversible, de manière à maximiser le rendement de ce convertisseur réversible, surtout s'il fonctionne sous pression comme suit:
- en mode stockage d'électricité, en vaporisant l'eau nécessaire au fonctionnement de l'électrolyseur SOEC uniquement grâce à la récupération de la chaleur dégagée par la compression d'air, tout en cherchant à minimiser la dépense électrique pour réaliser cette compression, c'est-à-dire en générant une pression et débit d'air minimales permettant de vaporiser l'eau nécessaire à l'électrolyse et de faire fonctionner le convertisseur en mode pile à combustible SOFC en lui apportant suffisamment de comburant;
- en mode déstockage d'électricité, en fournissant le débit de comburant à la pile SOFC, à partir du réservoir de stockage d'air comprimé en mode stockage, tout en réduisant la consommation électrique de tous les auxiliaires de manière à fournir le maximum de puissance électrique à partir du système.

Ainsi, pour stocker l'électricité, le système réversible selon l'invention comprime, de manière isotherme, de l'air qui est stocké dans un réservoir approprié, la chaleur dégagée par cette compression permettant de produire de la vapeur d'eau qui est ensuite électrolysée dans l'électrolyseur SOEC pour produire de l'hydrogène. Ce dernier est lui aussi stocké dans un réservoir tout comme l'oxygène produit qui pourra aussi être valorisé pour faciliter l'amortissement du système.

La compression de l'air comprimé a donc lieu en phase de stockage d'électricité lorsque celle-ci est en excédant, et le déstockage de cet air comprimé se fait très majoritairement au sein de la pile SOFC lorsque celle-ci doit fournir de la puissance électrique.

Grâce au système de l'invention, le rendement du convertisseur électrochimique fonctionnant en mode pile SOFC est amélioré, puisqu'il bénéficie d'un stock d'air déjà comprimé, la consommation électrique du compresseur n'intervenant plus dans le rendement de la pile à combustible SOFC. L'air a été comprimé auparavant et toute la puissance de la pile est alors disponible et/ou injectable sur un réseau électrique.

De plus, ce stock d'air comprimé est réalisé sur une période où l'électricité en excédant est normalement moins coûteuse.

Enfin, ce stock d'air comprimé constitue aussi une énergie mécanique disponible évitant tout auxiliaire électrique dans le système au profit d'actionneurs pneumatiques préservant au maximum la puissance électrique fournie par la pile.

Comme précisé par la suite, pour maximiser le rendement de la pile (mode déstockage), les actionneurs qui sont électriques selon l'état de l'art deviennent pneumatiques, par exemple des vannes, dans le cadre de l'invention, du fait de l'utilisation possible de l'air comprimé disponible. Les actionneurs pneumatiques étant aussi utiles au fonctionnement du système en mode stockage, une petite part de l'air comprimé durant le mode stockage peut aussi être utilisée durant ce même mode de stockage, pour faire fonctionner l'ensemble des actionneurs pneumatiques du système. Cela permet ainsi de mutualiser ces mêmes actionneurs pour les deux modes de fonctionnement (stockage et déstockage). Pour cela, il suffit d'avoir plusieurs réservoirs de stockage d'air comprimé de manière à toujours en avoir au moins un disponible pour le fonctionnement des actionneurs pneumatiques.

De préférence le convertisseur étant un réacteur à empilement de cellules électrochimiques élémentaires à oxydes solides, formées chacune d'une électrode H₂, d'une électrode O₂ et d'un électrolyte intercalé entre les deux électrodes, et une pluralité d'interconnecteurs électrique et fluidique agencés chacun entre deux cellules élémentaires adjacentes avec une de ses faces en contact électrique avec l'électrode H₂ d'une des deux cellules élémentaires et l'autre de ses faces en contact électrique avec l'électrode O₂ de l'autre des deux cellules élémentaires.

Selon un mode de réalisation avantageux, le système comprend en outre un réservoir de stockage d'oxygène produit, relié au convertisseur.

Avantageusement, il peut être prévu des actionneurs pneumatiques du système, reliés au réservoir de stockage d'air comprimé.

Selon une variante avantageuse de réalisation, le système comprend un premier détendeur entre le réservoir de stockage d'air comprimé et l'entrée du convertisseur électrochimique.

De préférence, le premier détendeur comprend une turbine couplée à un alternateur.

De préférence encore, le premier détendeur comprend une source froide, adaptée pour fonctionner à une température inférieure à la température ambiante. Cette source froide peut être reliée à un climatiseur.

Lorsque le système comprend le réacteur de méthanation, la source froide est avantageusement reliée à un dispositif de condensation et/ou de séparation des gaz en sortie de convertisseur en tant que pile à combustible SOFC.

Selon une autre variante avantageuse de réalisation, le système comprend un deuxième détendeur, relié à la sortie du convertisseur électrochimique. De préférence, le deuxième détendeur comprend une turbine couplée à un alternateur.

L'invention concerne également sous un autre de ses aspects, un procédé de fonctionnement du système réversible décrit précédemment, comprenant les étapes simultanées suivantes:
a/ en mode de stockage d'électricité :
   - fonctionnement du compresseur d'air;
   - vaporisation de l'eau liquide amenée par la ligne d'alimentation par la chaleur dégagée lors de la compression d'air ;
   - fonctionnement du convertisseur en tant qu'électrolyseur SOEC à partir de la vapeur d'eau dans la ligne d'alimentation;
   - stockage de l'air comprimé issu du compresseur d'air ;
   - stockage de l'hydrogène produit par l'électrolyseur SOEC ;
b/ en mode de déstockage de l'électricité :
   - déstockage de l'air comprimé produit en mode a/;
   - déstockage de l'hydrogène produit en mode a/ ;
   - fonctionnement du convertisseur en tant que pile à combustible SOFC à partir de l'air déstocké et de l'hydrogène déstocké ou le cas échéant, du mélange de méthane et de vapeur d'eau obtenu par méthanation à partir de l'hydrogène déstocké.

Selon un mode de réalisation avantageux, en mode a/, on réalise en outre un stockage de l'oxygène produit par l'électrolyseur SOEC.

Avantageusement, on réalise le stockage d'air comprimé à une pression d'environ 85 bars.

Avantageusement encore, le stockage d'hydrogène produit, et le cas échéant de l'oxygène produit sont réalisés à une pression d'environ 30 bars.

Le fonctionnement du convertisseur à la fois en tant qu'électrolyseur SOFC et pile à combustible SOFC peut être réalisé avantageusement à une pression d'environ 30 bars.

Selon une variante avantageuse, on réalise en outre une détente d'air comprimé, en amont du convertisseur.

De préférence, on alimente en air comprimé des actionneurs pneumatiques du système.

Selon une autre variante avantageuse, on réalise en outre, en aval du convertisseur SOFC, une détente de la vapeur d'eau produite ou de l'air appauvri

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :

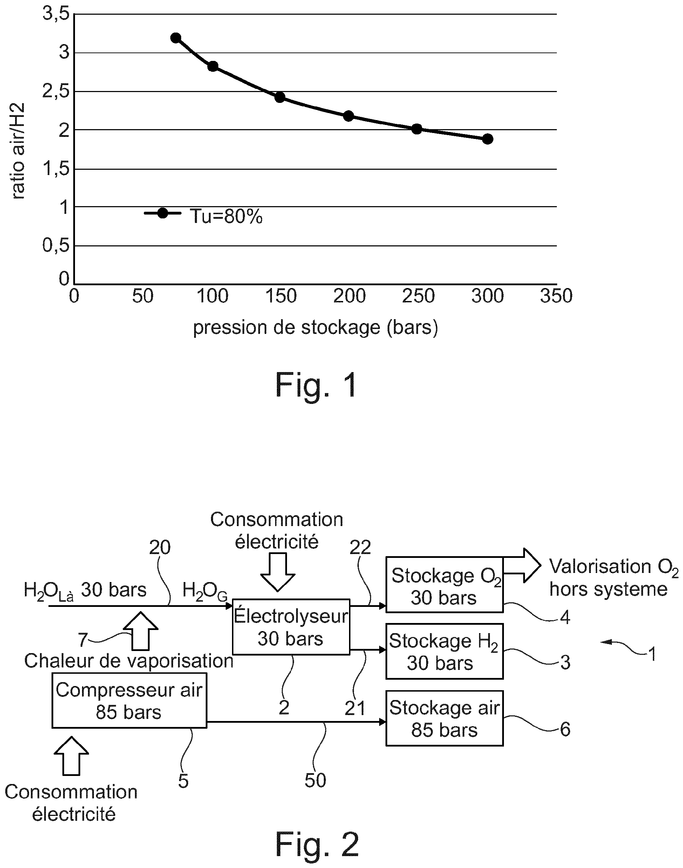

- la figure 1 illustre sous forme d'une courbe, l'impact du niveau de pression d'air comprimé permettant la vaporisation d'une quantité suffisante d'eau pour un taux d'utilisation donné en fonction du rapport entre débit d'air et débit d'hydrogène dans un convertisseur à haute température fonctionnant sous pression,
- la figure 2 est une vue schématique du principe d'un système réversible selon l'invention, le système fonctionnant sur cette figure 2 avec production d'hydrogène par électrolyse à haute température (SOEC), à partir d'eau vaporisée par la chaleur générée par la compression d'air, en amont de l'électrolyse ;

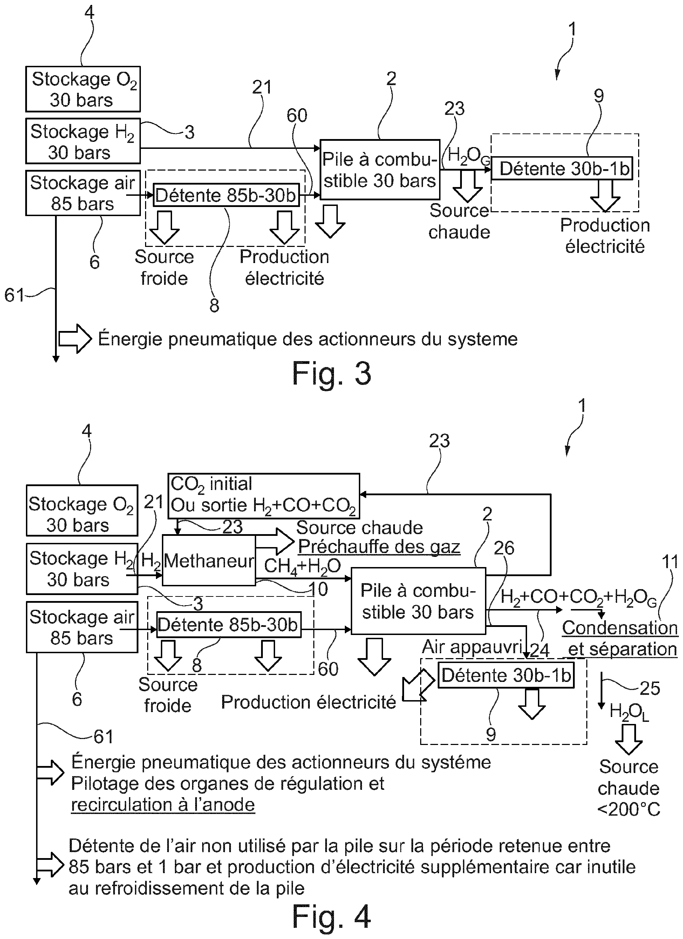

- la figure 3 est une vue schématique du système réversible fonctionnant en mode inverse de la figure 2, c'est-à-dire avec production d'électricité par pile à combustible SOFC à partir du déstockage en amont de l'hydrogène et d'air comprimé lors du fonctionnement du système selon la figure 2;
- la figure 4 reprend la figure 3, en y ajoutant des éléments de circulation en boucle fermée d'espèce carbonées, selon l'enseignement de la demande de brevet WO2016/156374A1.

Dans l'ensemble de la présente demande, les termes « entrée », « sortie » « aval » et « amont » sont à comprendre en référence au sens de circulation des gaz à travers respectivement la pile à combustible SOFC depuis les réservoirs de stockage d'hydrogène et d'air comprimé. En mode électrolyseur EHT, ces mêmes termes sont à comprendre en référence au sens de circulation de la vapeur d'eau alimentant l'électrolyseur vers les réservoirs de stockage d'hydrogène et d'oxygène qui sont produits au sein du convertisseur ou depuis le compresseur vers le stockage d'air comprimé.

On précise également que le réacteur décrit fonctionnant soit en mode pile à combustible, soit en mode inverse en tant qu'électrolyseur est de type à oxydes solides (SOFC, acronyme anglais de « *Solid Oxyde Fuel Cell »* et SOEC, acronyme anglais pour *«Salid Oxide Electrolysis Cell»)* fonctionnant à haute température. Ainsi, tous les constituants (anode/électrolyte/cathode) d'une cellule électrochimique sont des céramiques.

Typiquement, et de préférence, une cellule convenant à la réalisation de l'invention présente une électrode H2 réalisant le support des autres couches et constituée d'un cermet Nickel Zircone (Ni-YSZ) de l'ordre de 500µm d'épaisseur, un électrolyte en zircone yttriée de l'ordre d'une dizaine de µm d'épaisseur et une électrode O₂ constituée d'une Cobaltite de Lanthane dopée au Strontium (LSC) d'une cinquantaine de µm d'épaisseur.

Un convertisseur selon l'invention fonctionnant soit en tant que pile à combustible SOFC soit en tant qu'électrolyseur SOEC est un réacteur comportant plusieurs cellules électrochimiques élémentaires, de type à oxydes solides (SOFC) empilées alternativement avec des interconnecteurs. Chaque cellule est constituée d'une électrode H₂ et d'une électrode O₂, alternativement anode puis cathode selon le mode de fonctionnement (électrode H₂ est une cathode en électrolyse) entre lesquelles est disposé un électrolyte.

Dans les exemples ci-après à la fois celui comparatif et selon l'invention, l'empilement envisagé comporte 25 cellules électrochimiques de 100 cm² chacune.

Le réacteur fonctionne à 700°C en étant alimenté par :
- un débit égal à 12Nml/min/cm² de vapeur d'eau à 30 bars de pression en mode de fonctionnement pour l'électrolyse ;
- un débit égal à 4 Nml/min/cm² d'hydrogène et 36Nml/min/cm² d'air à 30 bars en mode pile à combustible.

Les deux points de fonctionnement cibles pour la tension et le courant correspondent à :
- un taux d'utilisation de 80% de la vapeur d'eau en électrolyse, soit un courant surfacique de -1,38 A/cm² à une tension de 1,26V;
- un taux d'utilisation de 80% d'hydrogène en pile à combustible, soit un courant surfacique de 0,46 A/cm² à une tension de 0,84 V.

### Exemple comparatif :

On considère un convertisseur électrochimique selon l'état de l'art, fonctionnant à 30 bars de pression

Lorsqu'il fonctionne selon une pile à combustible SOFC, celle-ci est alimentée directement par un réservoir en hydrogène à 30 bars.

Autrement dit, classiquement une pile SOFC fonctionne avec de l'hydrogène pur en tant que combustible fourni directement par un réservoir.

L'air en tant que comburant est également comprimé à 30 bars par un compresseur d'air pendant le fonctionnement de la pile.

Lorsqu'il fonctionne en mode électrolyseur, celui-ci est alimenté directement en vapeur d'eau sous pression, vaporisée par une source d'énergie électrique en l'absence de source de chaleur externe.

Le bilan de la consommation d'électricité du convertisseur en mode électrolyseur fonctionnant à 30 bars est le suivant :
- le besoin de puissance électrique pour la vaporisation de l'eau est égal à 1339 W,
- le besoin de puissance électrique pour l'électrolyse est de 4342 W.

Ce point de fonctionnement correspond à un rendement électrique, c'est-à-dire le rapport entre le pouvoir calorifique supérieur (PCS) de l'hydrogène produit et la consommation électrique nécessaire à l'électrolyse et à la vaporisation, de 90%. Un tiers environ de la consommation électrique est due à la vaporisation.

Le bilan de la production d'électricité avec un convertisseur en mode pile à combustible SOFC fonctionnant à 30 bars est le suivant:
- la puissance électrique produite par la pile est égale à 967 W ;
- le besoin de puissance nécessaire à la compression de l'air à 30 bars est de l'ordre de 388 W, grèvant d'autant le bilan de l'électricité produite par le système selon l'état de l'art et disponible en mode déstockage.

Ce point de fonctionnement correspond à un rendement électrique de 38%, le rendement étant ici étant ici le rapport entre la puissance électrique produite et le PCS de l'hydrogène H₂ consommé sommé à la consommation électrique du compresseur d'air, c'est-à-dire le bilan de ce qui est produit divisé par ce qui a été consommé pour le produire

Le rendement complet d'un système réversible de stockage/déstockage d'électricité, fonctionnant à 30 bars de pression, selon l'état de l'art (exemple comparatif) a donc une valeur de 34,5%, soit le produit 0,9^{∗}0,38.

### Exemple 1 selon l'invention:

Le graphe de la figure 1 montre l'impact du niveau de pression d'air comprimé permettant la vaporisation de suffisamment d'eau pour un taux d'utilisation (Tu) de 80% en fonction du ratio entre le débit d'air et celui d'hydrogène H₂ dans un convertisseur.

Il ressort de ce graphe que pour avoir un ratio égal au minimum à 3, ce qui correspond à une quantité suffisante de comburant pour le fonctionnement en mode pile SOFC, la pression cible de stockage de l'air comprimé, à un débit de 36Nml/min/cm², doit être égale à environ 85 bars, pour un fonctionnement du convertisseur à 30 bars.

Un système réversible 1 selon l'invention est représenté schématiquement en figures 2 et 3, le convertisseur électrochimique 2 du système fonctionnant en mode électrolyse en figure 2 et en mode pile à combustible en figure 3.

On précise que sur la figure 2, H₂O_{L} désigne l'eau sous pression à l'état liquide, tandis que H₂O_{G} désigne de la vapeur d'eau sous cette même pression.

Ainsi, le système 1 comprend une ligne d'alimentation 20 en eau liquide sous pression H₂O_{L} à 30 bars qui est reliée aux électrodes H₂ de l'électrolyseur 2.

A la sortie des électrodes H₂ de l'électrolyseur 2, une ligne d'évacuation 21 alimente un réservoir de stockage 3 en hydrogène produit à 30 bars par l'électrolyse de l'eau.

A la sortie des électrodes O₂ de l'électrolyseur 2, une ligne d'évacuation 22 alimente un réservoir de stockage 4 en oxygène produit à 30 bars par l'électrolyse de l'eau. Comme indiqué sur cette figure 2, l'oxygène O₂ produit et stocké peut être directement valorisé en dehors du système réversible 1.

Simultanément et en parallèle de l'électrolyse de l'eau, un compresseur d'air 5 comprime de l'air à une pression de 85 bars. L'air comprimé est amené par le biais d'une ligne d'alimentation 50, un réservoir de stockage 6. L'air est donc stocké à une pression de 85 bars dans le réservoir 6.

Selon l'invention, la chaleur nécessaire à la vaporisation de l'eau sous pression en entrée d'électrolyseur 2 est complètement apportée par la chaleur dégagée lors de la compression d'air dans le compresseur 5. Ainsi, un échangeur de chaleur 7 est agencé entre le compresseur 5 et la ligne d'alimentation 20 en eau liquide H₂O_{L} à 30 bars pour apporter directement la chaleur de vaporisation nécessaire issue du compresseur 5. L'eau liquide H₂O_{L} à 30 bars passe donc à l'état de vapeur H₂O_{G} à 30 bars, dans la ligne 20 avant son entrée dans l'électrolyseur 2.

En mode inverse de fonctionnement, i.e. lorsque le convertisseur 2 fonctionne en tant que pile à combustible, celle-ci est directement alimentée en hydrogène, en tant que carburant, qui est déstocké à 30 bars depuis le réservoir 3 vers l'électrode H₂ du convertisseur.

Egalement, le réservoir 6 fournit à la pile 2, l'air nécessaire qui est déstocké à 85 bars depuis le réservoir 6, puis détendu à la pression de 30 bars, sur la ligne d'alimentation 60 de la pile 2, afin d'alimenter en comburant l'électrode O₂, à la même pression que l'hydrogène fourni.

De manière avantageuse, on peut se servir d'une partie de l'énergie pneumatique emmagasinée lors du stockage d'air comprimé pour le fonctionnement des actionneurs du système 1. Ainsi, une ligne dédiée 61 reliée au réservoir d'air 6 peut alimenter les actionneurs en air comprimé.

Comme symbolisé en pointillés sur cette figure 2, la détente de l'air comprimé peut être mise en oeuvre avantageusement dans un détendeur 8, agencé sur la ligne d'alimentation 60. De manière avantageuse, comme détaillé par la suite, l'énergie dégagée par la détente peut être valorisée en tant que source froide et/ou pour la production d'électricité. Cette énergie de détente peut notamment servir à réaliser une condensation de l'eau en sortie de système 1 et/ou une valorisation du froid à des fins de climatisation. Pour la production d'électricité, ce détendeur 8 peut comprendre une turbine couplée à un alternateur.

En sortie de pile 2, la vapeur d'eau H₂O_{G} à 30 bars, évacuée par la ligne d'évacuation 23 peut être avantageusement détendue, notamment jusqu'à une pression de 1 bar, grâce à un détendeur 9. L'énergie dégagée par cette détente de la vapeur d'eau produite peut avantageusement servir à la production d'électricité. Pour la production d'électricité, le détendeur 9 peut comprendre une turbine couplée à un alternateur.

La chaleur dégagée par la vapeur d'eau H₂O_{G} à 30 bars, évacuée par la ligne d'évacuation 23 peut être valorisée en tant que source chaude. On peut ainsi réaliser une production d'eau chaude sanitaire à partir de cette chaleur dégagée.

Le bilan de la consommation d'électricité du convertisseur 2, en mode de fonctionnement électrolyseur à 30 bars comme sur la figure 2, est le suivant :
- le besoin de puissance électrique pour la vaporisation de l'eau est égal à 0 W puisqu'elle est entièrement fournie par la récupération de la chaleur de compression de l'air dans le compresseur 5 ;
- le besoin de puissance électrique nécessaire à l'électrolyse est égal à 4342 W;
- le besoin de puissance électrique pour la compression de l'air à 85 bars est de 1447 W.

Ce point de fonctionnement correspond à un rendement électrique de 88%.

On constate donc que comparativement à l'exemple comparatif décrit ci-avant, le système 1 selon l'invention, i.e. un stockage d'air comprimé à 85 bars avec récupération de la chaleur pour vaporiser plutôt qu'en vaporisant l'eau nécessaire avec de l'énergie électrique, induit une perte de rendement de valeur faible puisqu'égale à 2%, soit 88% au lieu de 90%.

En revanche, le système 1 selon l'invention apporte des gains de rendements substantiels en mode de fonctionnement du convertisseur 2 en pile à combustible.

En effet, le bilan de la production d'électricité du convertisseur 2 selon l'invention, en mode pile à combustible fonctionnant à 30 bars est le suivant :
- la puissance électrique produite par la pile est égale à 967 W ;
- le besoin électrique de compression de l'air à 30 bars est égal à 0 W puisqu'entièrement fourni par le déstockage de l'air à 85 bars depuis le réservoir 6.

Ce point de fonctionnement correspond à un rendement électrique de 45%, soit une augmentation de près 7 % de rendement comparativement à l'exemple comparatif décrit ci-avant.

Le rendement complet (électricité stockée/électricité déstockée) d'un système réversible 1 de stockage/déstockage d'électricité, fonctionnant à 30 bars de pression, selon l'invention a une valeur de 40%, soit le produit 0,88^{∗}0,45.

Le gain complet de rendement apporté par le système réversible selon l'invention est donc de plus de 5 %, soit 40%-34,5%, notamment grâce à l'amélioration du rendement électrique du convertisseur 2 en mode de fonctionnement pile à combustible SOFC.

En mode d'électrolyse, pour une production d'hydrogène à un débit de 12Nml/min/cm², le système selon l'invention requière un stockage d'air comprimé à 85 bars à un débit 36Nml/min/cm².

En mode pile à combustible, la pile 2 consommant tout l'hydrogène produit au préalable, à un débit de 4Nml/min/cm², peut avoir une alimentation en air comprimé qui peut varier de 12Nml/min/cm² à 36Nml/min/cm². Ce besoin variable permet donc avantageusement d'utiliser le surplus de stock d'air comprimé, soit pour réguler thermiquement la pile en plus de l'apport en comburant nécessaire, soit pour alimenter facilement des actionneurs pneumatiques du système.

Enfin, la détente de l'air stocké à 85 bars pour une utilisation à 30 bars, au sein du détendeur 8 en amont de la pile 2 peut se faire au sein d'une turbine couplée à un alternateur. Cela aura pour effet d'augmenter la production électrique et donc le rendement du système 1 selon l'invention en mode déstockage.

En outre, la détente de 85 bars à 30 bars produit une source froide qui peut être utilisée au sein du système complet. Cette source froide peut ainsi servir à la condensation et séparation des gaz en sortie de pile 2.

### Exemple 2 selon l'invention :

Le système 1 selon cet exemple 2, illustré en figure 4, reprend celui de l'exemple 1 en le combinant à un réacteur de méthanation 10, aussi appelé méthaneur, comme selon l'enseignement de la demande de brevet WO2016/156374A1.

Ainsi, on fait fonctionner la pile SOFC 2 avec du méthane CH₄ produit par hydrogénation de Co et Co2 dans le réacteur de méthanation 10 avec l'avantage majeur de faire circuler en boucle fermée, les espèces carbonées transformées à la fois dans la pile 2 et dans le réacteur de méthanation 10.

Ainsi, le système 1 selon cet exemple 2 comprend respectivement en boucle fermée d'amont en aval, la pile à combustible SOFC 2, un réacteur de méthanation 10 alimenté en hydrogène par la ligne 21 depuis le réservoir de stockage 3.

L'entrée de la pile SOFC 2 est donc reliée à la sortie du réacteur de méthanation 10 par le biais d'une ligne de retour 24.

L'entrée du réacteur de méthanation 10 est elle-même reliée à la sortie de la pile SOFC 2 qui est donc alimentée en mélange H₂+CO₂+CO, après avoir retiré la vapeur d'eau par condensation. L'entrée de la pile est reliée à la sortie du méthaneur est alors alimentée en mélange Ch4+ H2O pour pouvoir bénéficier d'une gestion thermique par reformage interne du méthane en hydrogène et monoxyde de carbone.

Comme montré en figure 4, au démarrage, au lieu de fonctionner en boucle fermée avec les espèces carbonées issues de la pile à combustible 2, on peut faire fonctionner le méthaneur 10 avec un apport initial de dioxyde de carbone CO₂. Pendant l'introduction de cette quantité de CO₂ par paliers, la pile 2 reçoit alors un mélange de CH₄ + H₂O + H₂. Le courant est alors augmenté progressivement par paliers, de manière à compenser l'endothermicité du reformage interne du CH₄.

En sortie de pile 2, en fonctionnement nominal, la ligne d'évacuation 23 évacue dans cet exemple 2, un mélange CO + CO₂ + H₂ et de vapeur d'eau H₂O_{G} à 30 bars, vers un dispositif de condensation/séparation 11. En sortie de ce dispositif 11, la ligne d'évacuation de l'eau liquide, typiquement à une température inférieure à 200°C forme ainsi une source chaude, notamment en tant que source d'eau chaude sanitaire.

En fonctionnement nominal également, le débit molaire d'hydrogène issu du réservoir 3 correspond à celui qui est oxydé en eau au sein de la pile 2.

La recirculation des gaz de sortie de l'électrode H2 étant totale, le débit circulant au sein de la pile 2 peut être bien plus important que celui issu du réservoir 3. Le taux d'utilisation de l'hydrogène au sein du système 1 est de 100% (pas d'hydrogène perdu ni brûlé).

Ainsi, le système 1 selon cet exemple 2 permet donc une utilisation des espèces carbonées en circuit fermé dans leur totalité. Il n'y a donc ni rejet de CO, ni de rejet de CO2 en sortie de pile 2 en régime nominal.

Dans les exemples 1 et 2, l'air appauvri à 30 bars en sortie de cathode de pile qui est évacué par la ligne d'évacuation 26 peut être avantageusement détendu, notamment jusqu'à une pression de 1 bar, grâce au détendeur 9. L'énergie dégagée par cette détente d'air appauvri peut avantageusement servir à la production d'électricité. Pour la production d'électricité, le détendeur 9 peut ici encore comprendre une turbine couplée à un alternateur.

Le couplage entre réservoir d'hydrogène 3, pile à combustible 2 et réacteur de méthanation 10 permet une optimisation de la gestion thermique de la pile 2, en particulier lorsqu'elle est plus particulièrement dédiée à la forte puissance.

En effet, la chaleur dégagée par le méthaneur 10 peut ici être utilisée pour réchauffer chacun des gaz en entrée de pile 2, comme symbolisé par la flèche de la source chaude en figure 4.

En outre, le couplage selon cet exemple 2 amène d'autres avantages subséquents.

Tout d'abord, la gestion thermique de la pile étant réalisée par le reformage du méthane au sein de la pile, les débits d'air à fournir en mode déstockage peuvent être préférentiellement liés à la quantité de comburant et non pas au refroidissement. Cela permet de pouvoir optimiser la longueur des phases de stockage et de déstockage différemment, puisque l'on dispose alors d'une capacité d'air comprimée à 85 bars non utilisée par la pile 2 et pouvant aussi être valoriser par ailleurs. Cette valorisation supplémentaire peut s'effectuer en alimentant par le biais de la ligne d'évacuation 61 reliée au réservoir d'air comprimé 6, une turbine en parallèle de la pile 2. Ainsi, on augmente encore sensiblement le rendement de déstockage du système 1 selon l'invention.

Ensuite, le stockage d'air comprimé à 85 bars peut fournir une énergie mécanique bien utile à la recirculation des espèces carbonées entre la sortie du séparateur de phase 11 en aval de la pile et l'entrée du méthaneur 10.

Enfin, la détente de l'air comprimé, réalisée dans le détendeur 8, entre le réservoir de stockage 6 à 85bars et l'entrée de la pile 2 à 30 bars, constitue une source froide qui peut être utilisée pour condenser et séparer les espèces carbonées à conserver en aval de la pile 2, au sein du dispositif 11.

L'invention n'est pas limitée aux exemples qui viennent d'être décrits ; on peut notamment combiner entre elles des caractéristiques des exemples illustrés au sein de variantes non illustrées.

Si les exemples correspondent à un fonctionnement d'un convertisseur électrochimique sous 30 bars de pression avec une compression d'air à 85 bars, d'autres niveaux de pression peuvent bien être entendu envisagés.

Par exemple, la pression de fonctionnement d'un convertisseur électrochimique peut être juste supérieure à la pression atmosphérique, typiquement de l'ordre de 1,5 bar et l'hydrogène est comprimé typiquement à 30 bars ou 200 bars après condensation et séparation de l'eau non transformée par l'électrolyse

Et, à l'inverse, il est tout-à-fait envisageable à partir d'un réservoir d'hydrogène comprimé à 200 bars ou 30bars, de détendre l'hydrogène à une pression proche de la pression atmosphérique, typiquement à 1,5 bar pour alimenter une pile SOFC.

D'autres variantes et améliorations de l'invention peuvent être réalisées sans pour autant sortir du cadre de l'invention.

### REFERENCES CITEES

[1]: Journal of Power Sources 195 (2010) pp 1971-1983;
[2]: Journal of Power Sources 228 (2013) pp 281-293;
[3]: Journal of Power Sources 251 (2014) pp 92-107.

## Revendications

1. Système (1) réversible de stockage et déstockage d'électricité comprenant :
- un convertisseur électrochimique (2) comprenant au moins une cellule électrochimique à oxydes solides formée chacune d'une électrode H₂, d'une électrode O₂ et d'un électrolyte intercalé entre ces deux électrodes, le convertisseur étant adapté pour fonctionner en réacteur d'électrolyse de vapeur d'eau à haute température (SOEC) et de manière réversible en pile à combustible (SOFC) et vice-et-versa ;
- un réservoir de stockage et de déstockage d'hydrogène (3), adapté pour stocker de l'hydrogène ou, de manière réversible, pour fournir de l'hydrogène au convertisseur ou le cas échéant à un réacteur de méthanation (10) en amont du convertisseur (2);
- un compresseur d'air (5) ;
- un réservoir de stockage d'air (6), adapté pour stocker de l'air issu du compresseur en mode stockage de l'électricité et pour fournir de l'air au convertisseur en mode déstockage de l'électricité ;
- une ligne (20) d'alimentation du convertisseur en eau liquide,
- un échangeur de chaleur (7) adapté pour échanger de la chaleur entre la ligne d'alimentation et le compresseur d'air,
le système étant configuré pour que :
• lorsque le système fonctionne en mode stockage de l'électricité et que le convertisseur fonctionne en électrolyse, le compresseur apporte à l'eau liquide, par le biais de l'échangeur, la chaleur produite lors de la compression d'air, afin de vaporiser l'eau avant son entrée dans l'électrode H₂ du convertisseur, tandis que l'air comprimé par le compresseur est stocké dans le réservoir d'air et l'hydrogène produit est stocké dans le réservoir d'hydrogène ;
• lorsque le système fonctionne en mode déstockage de l'électricité et que le convertisseur fonctionne de manière réversible en tant que pile à combustible, le réservoir d'hydrogène alimente en hydrogène l'électrode H₂ du convertisseur, ou le cas échéant le réacteur de méthanation qui lui-même alimente en mélange de méthane et d'eau l'électrode H₂ du convertisseur, tandis que le réservoir d'air alimente en air l'électrode O₂ du convertisseur.

2. Système (1) réversible selon la revendication 1, le convertisseur étant un réacteur à empilement de cellules électrochimiques élémentaires à oxydes solides, formées chacune d'une électrode H₂, d'une électrode O₂ et d'un électrolyte intercalé entre les deux électrodes, et une pluralité d'interconnecteurs électrique et fluidique agencés chacun entre deux cellules élémentaires adjacentes avec une de ses faces en contact électrique avec l'électrode H₂ d'une des deux cellules élémentaires et l'autre de ses faces en contact électrique avec l'électrode O₂ de l'autre des deux cellules élémentaires.

3. Système (1) réversible selon l'une des revendications précédentes, comprenant en outre un réservoir de stockage d'oxygène (4) produit, relié au convertisseur.

4. Système (1) réversible selon l'une des revendications précédentes, comprenant des actionneurs pneumatiques du système, reliés au réservoir de stockage d'air comprimé.

5. Système (1) réversible selon l'une des revendications précédentes, comprenant un premier détendeur (8) entre le réservoir de stockage d'air comprimé et l'entrée du convertisseur électrochimique.

6. Système (1) réversible selon la revendication 5, le premier détendeur (8) comprenant une turbine couplée à un alternateur.

7. Système (1) réversible selon la revendication 5, le premier détendeur (8) comprenant une source froide, adaptée pour fonctionner à une température inférieure à la température ambiante.

8. Système (1) réversible selon la revendication 7, la source froide étant reliée à un climatiseur ou lorsque le système comprend le réacteur de méthanation (10), la source froide étant reliée à un dispositif de condensation et/ou de séparation (11) des gaz en sortie de convertisseur en tant que pile à combustible SOFC.

9. Système (1) réversible selon l'une des revendications précédentes, comprenant un deuxième détendeur (9) relié à la sortie du convertisseur électrochimique.

10. Système (1) réversible selon la revendication 9, le deuxième détendeur (9) comprenant une turbine couplée à un alternateur.

11. Procédé de fonctionnement du système réversible selon l'une des revendications précédentes, comprenant les étapes simultanées suivantes:
a/ en mode de stockage d'électricité :
- fonctionnement du compresseur d'air (5);
- vaporisation de l'eau liquide amenée par la ligne d'alimentation par la chaleur dégagée lors de la compression d'air ;
- fonctionnement du convertisseur (2) en tant qu'électrolyseur SOEC à partir de la vapeur d'eau dans la ligne d'alimentation;
- stockage de l'air comprimé issu du compresseur d'air ;
- stockage de l'hydrogène produit par l'électrolyseur SOEC ;
b/ en mode de déstockage de l'électricité :
- déstockage de l'air comprimé produit en mode a/;
- déstockage de l'hydrogène produit en mode a/ ;
- fonctionnement du convertisseur (2) en tant que pile à combustible SOFC à partir de l'air déstocké et de l'hydrogène déstocké ou le cas échéant, du mélange de méthane et de vapeur d'eau obtenu par méthanation à partir de l'hydrogène déstocké.

12. Procédé de fonctionnement selon la revendication 11, selon lequel, en mode a/, on réalise en outre un stockage de l'oxygène produit par l'électrolyseur SOEC.

13. Procédé de fonctionnement selon la revendication 11 ou 12, selon lequel on réalise le stockage d'air comprimé à une pression d'environ 85 bars, le stockage d'hydrogène produit, et le cas échéant de l'oxygène produit étant réalisés de préférence à une pression d'environ 30 bars, avec de préférence le fonctionnement du convertisseur à la fois en tant qu'électrolyseur SOFC et pile à combustible SOFC à une pression d'environ 30 bars.

14. Procédé de fonctionnement selon l'une des revendications 11 à 13, selon lequel on réalise en outre une détente d'air comprimé, en amont du convertisseur, avec de préférence on alimente en air comprimé des actionneurs pneumatiques du système.

15. Procédé de fonctionnement selon l'une des revendications 11 à 14, selon lequel on réalise en outre, en aval du convertisseur, une détente de la vapeur d'eau produite ou de l'air appauvri.

## Patentansprüche

1. Reversibles System (1) zum Speichern und Abgeben von Elektrizität, das enthält:
- einen elektrochemischen Wandler (2), der mindestens eine elektrochemische Festoxidzelle enthält, die je von einer H₂-Elektrode, einer O₂-Elektrode und einem zwischen diese zwei Elektroden eingefügten Elektrolyten gebildet werden, wobei der Wandler geeignet ist, als Hochtemperatur-Wasserdampf-Elektrolyse-Reaktor (SOEC) und reversibel als Brennstoffzelle (SOFC) und umgekehrt zu arbeiten;
- einen Wasserstoffspeicher- und abgabebehälter (3), der geeignet ist, Wasserstoff zu speichern, oder reversibel Wasserstoff an den Wandler oder ggf. an einen dem Wandler (2) vorgelagerten Methanisierungsreaktor (10) zu liefern;
- einen Luftverdichter (5);
- einen Luftspeicherbehälter (6), der geeignet ist, im Elektrizitätsspeichermodus vom Verdichter stammende Luft zu speichern und im Elektrizitätsabgabemodus Luft an den Wandler zu liefern;
- eine Leitung (20) zur Versorgung des Wandlers mit flüssigem Wasser,
- einen Wärmetauscher (7), der geeignet ist, Wärme zwischen der Versorgungsleitung und dem Luftverdichter auszutauschen;
wobei das System konfiguriert ist, damit:
• wenn das System im Speichermodus der Elektrizität arbeitet und der Wandler im Elektrolysebetrieb arbeitet, der Verdichter dem flüssigen Wasser mittels des Tauschers die bei der Luftverdichtung erzeugte Wärme zuführt, um das Wasser vor seinem Eintritt in die H₂-Elektrode des Wandlers zu verdampfen, während die vom Verdichter verdichtete Luft im Luftbehälter gespeichert und der erzeugte Wasserstoff im Wasserstoffbehälter gespeichert wird;
• wenn das System im Abgabemodus der Elektrizität arbeitet und der Wandler reversibel als Brennstoffzelle arbeitet, der Wasserstoffbehälter die H₂-Elektrode des Wandlers oder ggf. den Methanisierungsreaktor mit Wasserstoff versorgt, der selbst die H₂-Elektrode des Wandlers mit einer Mischung aus Methan und Wasser versorgt, während der Luftbehälter die O₂-Elektrode des Wandlers mit Luft versorgt.

2. Reversibles System (1) nach Anspruch 1, wobei der Wandler ein Reaktor mit einem Stapel von elektrochemischen Festoxid-Elementarzellen, die je von einer H₂-Elektrode, einer O₂-Elektrode und einem zwischen die zwei Elektroden eingefügten Elektrolyten gebildet werden, und einer Vielzahl von elektrischen und fluidischen Zwischenverbindern ist, die je zwischen zwei benachbarten Elementarzellen mit einer ihrer Seiten in elektrischem Kontakt mit der H₂-Elektrode einer der zwei Elementarzellen und der anderen ihrer Seiten in elektrischem Kontakt mit der O₂-Elektrode der anderen der zwei Elementarzellen eingerichtet sind.

3. Reversibles System (1) nach einem der vorhergehenden Ansprüche, das außerdem einen Speicherbehälter von erzeugtem Sauerstoff (4) enthält, der mit dem Wandler verbunden ist.

4. Reversibles System (1) nach einem der vorhergehenden Ansprüche, das pneumatische Stellglieder des Systems enthält, die mit dem Druckluftspeicherbehälter verbunden sind.

5. Reversibles System (1) nach einem der vorhergehenden Ansprüche, das einen ersten Druckminderer (8) zwischen dem Druckluftspeicherbehälter und dem Eingang des elektrochemischen Wandlers enthält.

6. Reversibles System (1) nach Anspruch 5, wobei der erste Druckminderer (8) eine mit einem Generator gekoppelte Turbine enthält.

7. Reversibles System (1) nach Anspruch 5, wobei der erste Druckminderer (8) eine kalte Quelle enthält, die geeignet ist, bei einer Temperatur unterhalb der Umgebungstemperatur zu arbeiten.

8. Reversibles System (1) nach Anspruch 7, wobei die kalte Quelle mit einem Klimagerät verbunden ist, oder wenn das System den Methanisierungsreaktor (10) enthält, die kalte Quelle mit einer Kondensierungs- und/oder Trennvorrichtung (11) der Gase am Ausgang des Wandlers als Brennstoffzelle SOFC verbunden ist.

9. Reversibles System (1) nach einem der vorhergehenden Ansprüche, das einen zweiten Druckminderer (9) enthält, der mit dem Ausgang des elektrochemischen Wandlers verbunden ist.

10. Reversibles System (1) nach Anspruch 9, wobei der zweite Druckminderer (9) eine mit einem Generator gekoppelte Turbine enthält.

11. Betriebsverfahren des reversiblen Systems nach einem der vorhergehenden Ansprüche, das die folgenden gleichzeitigen Schritte enthält:
a/ im Elektrizitätsspeichermodus:
- Betrieb des Luftverdichters (5);
- Verdampfen des von der Versorgungsleitung zugeführten flüssigen Wassers durch die bei der Luftverdichtung freigesetzte Wärme;
- Betrieb des Wandlers (2) als Elektrolyseur SOEC ausgehend von dem Wasserdampf in der Versorgungsleitung;
- Speichern der vom Luftverdichter stammenden Druckluft;
- Speichern des vom Elektrolyseur SOEC erzeugten Wasserstoffs;
b/ im Abgabemodus der Elektrizität:
- Abgabe der im Modus a/ erzeugten Druckluft;
- Abgabe des im Modus a/ erzeugten Wasserstoffs;
- Betrieb des Wandlers (2) als Brennstoffzelle SOFC ausgehend von der abgegebenen Luft und dem abgegebenen Wasserstoff oder ggf. der Mischung von Methan und Wasserdampf, die durch Methanisierung ausgehend von dem abgegebenen Wasserstoff erhalten wird.

12. Betriebsverfahren nach Anspruch 11, wobei im Modus a/ außerdem eine Speicherung des vom Elektrolyseur SOEC erzeugten Sauerstoffs durchgeführt wird.

13. Betriebsverfahren nach Anspruch 11 oder 12, wobei die Speicherung von Druckluft bei einem Druck von etwa 85 Bar durchgeführt wird, die Speicherung von erzeugtem Wasserstoff und ggf. des erzeugten Sauerstoffs vorzugsweise bei einem Druck von etwa 30 Bar durchgeführt wird, mit vorzugsweise dem Betrieb des Wandlers sowohl als Elektrolyseur SOFC als auch als Brennstoffzelle SOFC bei einem Druck von etwa 30 Bar.

14. Betriebsverfahren nach einem der Ansprüche 11 bis 13, wobei außerdem stromaufwärts vor dem Wandler eine Druckluftexpansion durchgeführt wird, wobei vorzugsweise pneumatische Stellglieder des Systems mit Druckluft versorgt werden.

15. Betriebsverfahren nach einem der Ansprüche 11 bis 14, wobei außerdem stromabwärts hinter dem Wandler eine Expansion des erzeugten Wasserdampfs oder der verarmten Luft durchgeführt wird.

## Claims

1. Reversible system (1) for storing and extracting electricity, comprising:
- an electrochemical converter (2) comprising at least one solid oxide electrochemical cell each formed of an H₂ electrode, an O₂ electrode and an electrolyte interposed between these two electrodes, the converter being designed to operate as a high-temperature water vapour electrolysis reactor (SOEC) and, reversibly, as a fuel cell (SOFC), and vice versa;
- a hydrogen storage and extraction reservoir (3), designed to store hydrogen or, reversibly, to supply hydrogen to the converter or, if appropriate, to a methanation reactor (10) upstream of the converter (2);
- an air compressor (5);
- an air storage reservoir (6), designed to store air that comes from the compressor in electricity storage mode and to supply air to the converter in electricity extraction mode;
- a supply line (20) for supplying liquid water to the converter;
- a heat exchanger (7) designed to exchange heat between the supply line and the air compressor;
the system being configured such that:
• when the system operates in electricity storage mode and the converter operates in electrolysis mode, the compressor introduces the heat produced during the air compression to the liquid water via the exchanger in order to vaporize the water before it enters the H₂ electrode of the converter, while the air compressed by the compressor is stored in the air reservoir and the hydrogen produced is stored in the hydrogen reservoir;
• when the system operates in electricity extraction mode and the converter operates reversibly as a fuel cell, the hydrogen reservoir supplies hydrogen to the H₂ electrode of the converter or, if appropriate, the methanation reactor which itself supplies a mixture of methane and water to the H₂ electrode of the converter, while the air reservoir supplies air to the O₂ electrode of the converter.

2. Reversible system (1) according to Claim 1, the converter being a reactor with a stack of solid oxide elementary electrochemical cells, each formed of an H₂ electrode, an O₂ electrode and an electrolyte interposed between the two electrodes, and a plurality of electrical and fluidic interconnectors each arranged between two adjacent elementary cells with one of its faces in electrical contact with the H₂ electrode of one of the two elementary cells and the other of its faces in electrical contact with the O₂ electrode of the other one of the two elementary cells.

3. Reversible system (1) according to either of the preceding claims, also comprising a produced-oxygen storage reservoir (4) connected to the converter.

4. Reversible system (1) according to one of the preceding claims, comprising pneumatic actuators of the system that are connected to the compressed air storage reservoir.

5. Reversible system (1) according to one of the preceding claims, comprising a first expansion valve (8) between the compressed air storage reservoir and the inlet of the electrochemical converter.

6. Reversible system (1) according to Claim 5, the first expansion valve (8) comprising a turbine coupled to an alternator.

7. Reversible system (1) according to Claim 5, the first expansion valve (8) comprising a cold source designed to operate at a temperature lower than the ambient temperature.

8. Reversible system (1) according to Claim 7, the cold source being connected to an air conditioner or, when the system comprises the methanation reactor (10), the cold source being connected to a condensation and/or separation device (11) for condensing and/or separating the gases at the outlet of the converter as SOFC fuel cell.

9. Reversible system (1) according to one of the preceding claims, comprising a second expansion valve (9) connected to the electrochemical converter outlet.

10. Reversible system (1) according to Claim 9, the second expansion valve (9) comprising a turbine coupled to an alternator.

11. Method for operating the reversible system according to one of the preceding claims, comprising the following simultaneous steps:
a/ in electricity storage mode:
- operating the air compressor (5);
- vaporizing the liquid water fed through the supply line by way of the heat given off during the air compression;
- operating the converter (2) as SOEC electrolyser via the water vapour in the supply line;
- storing the compressed air that comes from the air compressor;
- storing the hydrogen produced by the SOEC electrolyser;
b/ in electricity extraction mode:
- extracting the compressed air produced in mode a/;
- extracting the hydrogen produced in mode a/;
- operating the converter (2) as SOFC fuel cell via the extracted air and the extracted hydrogen or, if appropriate, the mixture of methane and water vapour obtained by methanation from the extracted hydrogen.

12. Operating method according to Claim 11, wherein, in mode a/, the oxygen produced by the SOEC electrolyser is also stored.

13. Operating method according to Claim 11 or 12, wherein compressed air is stored at a pressure of approximately 85 bar, produced hydrogen being stored and, if appropriate, produced oxygen being stored preferably at a pressure of approximately 30 bar, preferably with the converter operating both as SOFC electrolyser and SOFC fuel cell at a pressure of approximately 30 bar.

14. Operating method according to one of Claims 11 to 13, wherein compressed air is also expanded upstream of the converter, preferably with compressed air being supplied to the pneumatic actuators of the system.

15. Operating method according to one of Claims 11 to 14, wherein the produced water vapour or the depleted air is also expanded downstream of the converter.
